# FASCICULE DE BREVET EUROPEEN

(11) **EP 1 169 549 B1**
(45) Date de publication et mention de la délivrance du brevet: **15.09.2004**
(21) Numéro de dépôt: 99972712.6
(22) Date de dépôt: 25.11.1999
(51) Int. Cl.: F01B 9/04, F02B 75/04

(54) **DISPOSITIF DE TRANSMISSION MECANIQUE POUR MOTEUR A CYLINDREE VARIABLE**
MECHANISCHE TRANSMISSIONSVORRICHTUNG FÜR MOTOREN MIT VARIABLEM HUBRAUM
MECHANICAL TRANSMISSION DEVICE FOR ENGINE WITH VARIABLE VOLUME DISPLACEMENT

(30) Priorité: 26.11.1998 FR 9815089
(43) Date de publication de la demande: 09.01.2002
(73) Titulaire: Rabhi, Vianney, 69004 Lyon (FR)
(72) Inventeur: Rabhi, Vianney, 69004 Lyon (FR)
(74) Mandataire: Schmitt, John
(86) Numéro de dépôt international: PCT/FR1999/002901
(87) Numéro de publication internationale: WO 2000/031377

(56) Documents cités:
- FR-A- 1 402 509
- FR-A- 2 763 096
- FR-A- 2 763 097
- GB-A- 221 477

## Description

La présente invention est relative à un dispositif de transmission mécanique pour le guidage sans frottement des pistons d'un moteur à cylindrée variable.

Le dispositif de transmission mécanique suivant la présente invention consiste à perfectionner le dispositif permettant de faire varier durant leur fonctionnement la cylindrée et/ou le rapport volumétrique effectifs des moteurs à pistons décrits dans la demande de brevet français n° 97 05943 appartenant au demandeur.

Le dispositif de transmission mécanique suivant l'invention à pour avantage de faciliter l'usinage de chaque pièce du moteur à cylindrée variable.

Enfin, le dispositif de transmission mécanique offre une solution originale pour limiter les frottements entre le piston et le bloc moteur.

Le dispositif de transmission mécanique pour moteur à cylindrée variable suivant la présente invention comprend un piston solidaire dans sa partie inférieure d'une crémaillère coopérant :
- D'une part avec un dispositif de guidage à roulement, constitué d'au moins un rouleau qui assure un guidage sans frottement de ladite crémaillère sur le bloc moteur et d'un dispositif d'engrènement qui permet la synchronisation du déplacement dudit rouleau par rapport au piston.
- Et d'autre part avec un engrenage solidaire d'une bielle permettant de réaliser la transmission du mouvement entre le piston et ladite bielle.

Le dispositif de transmission mécanique suivant la présente invention comprend un piston qui est constitué d'un disque épais solidaire sur l'une de ses faces d'un pied de soutènement.

Le dispositif de transmission mécanique suivant la présente invention comprend un pied de soutènement qui comporte une structure en ailettes présentant un profil évasé, dont la partie la plus large est tournée du côté de la face du disque, des ailettes régulièrement réparties sur son pourtour pour permettre le refroidissement du piston, et un socle.

Le dispositif de transmission mécanique suivant la présente invention comprend un socle qui comporte en son milieu et sur sa hauteur une fente verticale qui est disposée dans le prolongement du pied de soutènement.

Le dispositif de transmission mécanique suivant la présente invention comprend un socle qui comporte de chaque côté de la fente, d'une part dans un plan vertical une face d'appui, et d'autre part dans un plan horizontal et parallèle à celui contenant le disque une face de poussée.

Le dispositif de transmission mécanique suivant la présente invention comprend une crémaillère qui est reliée au piston par l'intermédiaire d'une tige de liaison de section en T qui est fixée dans le socle.

Le dispositif de transmission mécanique suivant la présente invention comprend une tige de liaison qui présente un premier voile qui pénètre à l'intérieur de la fente verticale du socle jusqu'à ce que le trou ménagé dans ledit voile coopère avec l'alésage pour permettre à une vis de traverser ledit socle et coopérer avec un écrou de serrage.

Le dispositif de transmission mécanique suivant la présente invention comprend une tige de liaison qui présente un second voile disposé perpendiculairement au premier et qui vient en appui contre la face du socle.

Le dispositif de transmission mécanique suivant la présente invention comprend une crémaillère qui est constituée de deux éléments indépendants formant des demi-crémaillères qui sont fixés de chaque côté du premier voile de la tige de liaison.

Le dispositif de transmission mécanique suivant la présente invention comprend deux demi-crémaillères dont chacune comporte dans sa partie supérieure une face qui vient en contact avec la face de poussée du socle.

Le dispositif de transmission mécanique suivant la présente invention comprend deux demi-crémaillères dont chacune comporte une première crémaillère de faible dimension qui coopère avec le dispositif de guidage à roulement, et une seconde crémaillère de forte dimension dirigée dans une direction opposée à la première pour coopérer avec l'engrenage de transmission du mouvement entre le piston et la bielle.

Le dispositif de transmission mécanique suivant la présente invention comprend un dispositif de guidage à roulement qui est constitué d'au moins un rouleau qui assure un guidage sans frottement des demi-crémaillères sur le bloc moteur.

Le dispositif de transmission mécanique suivant la présente invention comprend un dispositif de guidage à roulement qui est constitué d'au moins un rouleau qui assure un guidage sans frottement des demi-crémaillères sur le bloc moteur, et d'un dispositif d'engrènement qui permet la synchronisation du déplacement dudit rouleau par rapport au piston.

Le dispositif de transmission mécanique suivant la présente invention comprend un dispositif de guidage à roulement qui est constitué de rouleaux synchronisés qui assurent un guidage sans frottement des demi-crémaillères sur le bloc moteur, et d'un dispositif d'engrènement qui permet la synchronisation du déplacement desdits rouleaux par rapport au piston.

Le dispositif de transmission mécanique suivant la présente invention comprend un dispositif de guidage à roulement qui est constitué de rouleaux synchronisés qui assurent un guidage sans frottement des demi-crémaillères sur le bloc moteur, d'un dispositif d'engrènement qui permet la synchronisation du déplacement desdits rouleaux par rapport au piston, et d'une liaison élastique prévue entre lesdits rouleaux et ledit dispositif d'engrènement qui autorise des variations de vitesse.

Le dispositif de transmission mécanique suivant la présente invention comprend des rouleaux qui sont chacun constitué d'un manchon cylindrique creux qui coopère avec la surface de roulement du second voile de la tige de liaison, et avec une plaque lisse solidaire du bloc moteur.

Le dispositif de transmission mécanique suivant la présente invention comprend un dispositif d'engrènement qui comporte des roues dentées qui sont fixées à chaque extrémité des manchons.

Le dispositif de transmission mécanique suivant la présente invention comprend des roues dentées qui coopèrent avec les crémaillères de faibles dimensions de chaque demi-crémaillère, et avec une pièce dont les extrémités longitudinales comportent une crémaillère.

Le dispositif de transmission mécanique suivant la présente invention comprend des roues dentées qui comportent un alésage central pourvu de cannelures coopérant avec celles usinées à chaque bout d'un axe qui permet de réunir lesdites roues entre elles à chaque extrémité du manchon cylindrique creux.

Le dispositif de transmission mécanique suivant la présente invention comprend un axe dont le diamètre externe est de dimensions déterminées pour venir traverser l'alésage interne du manchon cylindrique creux, et délimiter avec ce dernier un espace libre pour permettre la mise en place d'une liaison élastique.

Le dispositif de transmission mécanique suivant la présente invention comprend une liaison élastique qui est constituée d'une bague prévue entre le manchon et les roues dentées de sorte qu'une différence de vitesse entre le manchon et les roues dentées ne détruise pas prématurément ces dernières, et les crémaillères du dispositif d'engrènement.

Le dispositif de transmission mécanique suivant la présente invention comprend des rouleaux constitués de manchons qui viennent rouler sur la face du second voile de la tige de liaison de section en T d'une part, et sur la plaque lisse fixée sur le bloc moteur d'autre part.

Le dispositif de transmission mécanique suivant la présente invention comprend un engrenage qui présente un profil tronqué comportant de chaque côté de son alésage central des dentures coopérant respectivement avec la seconde crémaillère des demi-crémaillères, et la crémaillère de commande qui est montée dans une cavité, ou sur un guide, aménagés dans le bloc moteur.

Le dispositif de transmission mécanique suivant la présente invention comprend un engrenage qui comporte entre les dentures un évidemment permettant la mise en place de la bielle, et plus particulièrement de son pied, pour que son alésage coopère avec celui dudit engrenage.

Le dispositif de transmission mécanique suivant la présente invention comprend un engrenage qui présente à mi-largeur de chaque denture une rainure courbe dont le rayon de courbure est centré sur le point de basculement dudit engrenage autour de la bielle.

Le dispositif de transmission mécanique suivant la présente invention comprend des segments à profil courbe qui sont fixés à l'intérieur des rainures pour constituer les surfaces de roulement de l'engrenage.

Le dispositif de transmission mécanique suivant la présente invention comprend une crémaillère de commande coopérant avec les dentures de l'engrenage qui comporte à mi-largeur une rainure verticale et rectiligne dans laquelle est fixé un segment de même profil.

Le dispositif de transmission mécanique suivant la présente invention comprend un engrenage dont le segment des dentures vient rouler sur la tranche du premier voile de la tige de liaison, tandis que l'autre segment des dentures opposées de l'engrenage vient rouler sur le segment rectiligne de la crémaillère de commande.

Le dispositif de transmission mécanique suivant la présente invention comprend un point de contact, entre les rouleaux synchronisés et la face du second voile d'une part, et la plaque lisse d'autre part, qui est situé au niveau du rayon primitif des roues dentées.

Le dispositif de transmission mécanique suivant la présente invention comprend des segments qui constituent des surfaces de roulement dont le point de contact est positionné au niveau du rayon primitif de l'engrenage.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en perspective éclatée illustrant l'ensemble des pièces constituant le dispositif de transmission mécanique suivant la présente invention.
Figure 2 est une vue en perspective représentant le dispositif de transmission mécanique en position montée.
Figure 3 est une vue de côté montrant le dispositif de transmission mécanique suivant la présente invention.
Figure 4 est une vue en perspective illustrant en détail le piston et sa crémaillère suivant la présente invention.
Figures 5A et 5B sont des vues représentant en détail les rouleaux du dispositif de guidage à roulement suivant la présente invention.
Figure 6 est une vue en perspective montrant en détail l'engrenage permettant de réaliser la transmission du mouvement entre le piston et la bielle du moteur à cylindrée variable.

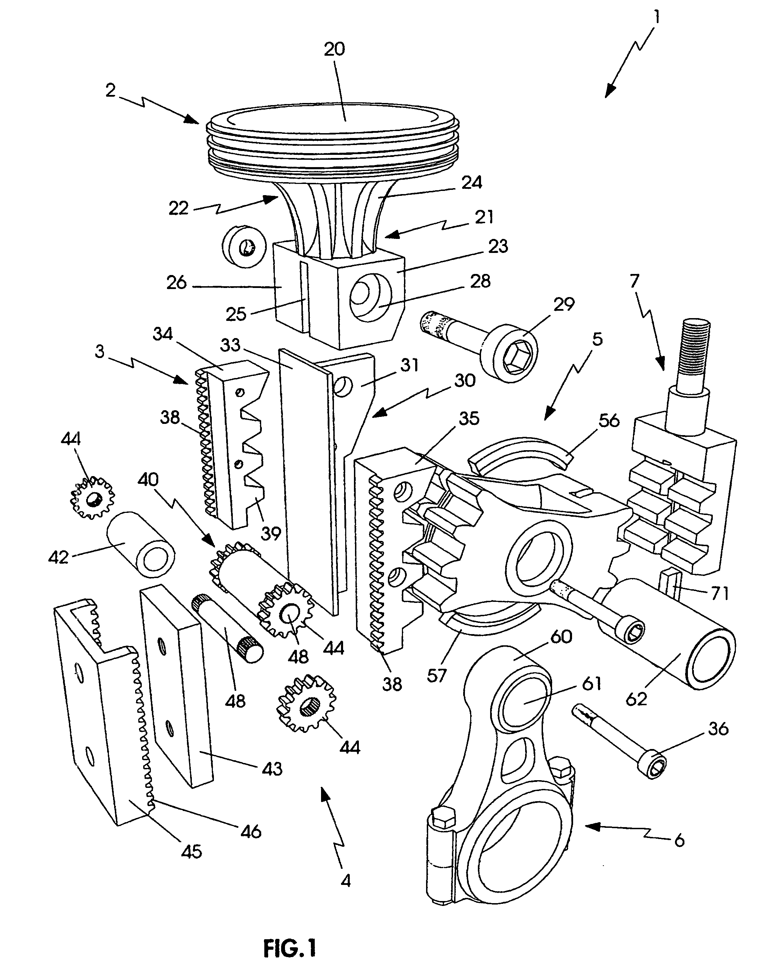

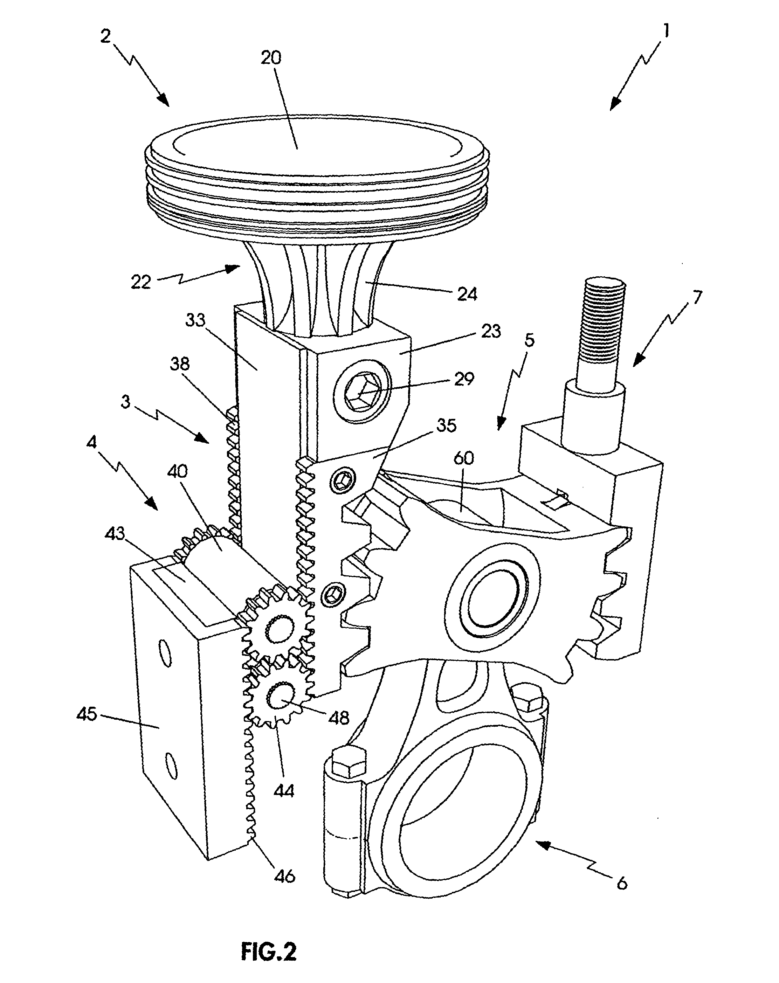

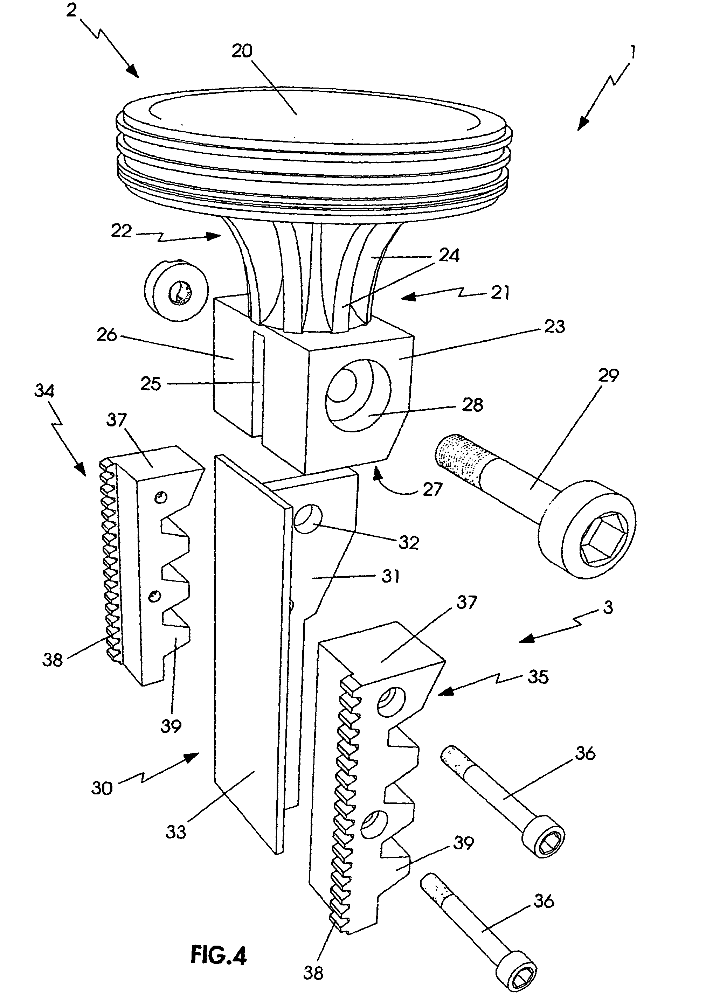

On a montré en figures 1 à 4, un dispositif de transmission mécanique 1 pour moteur à cylindrée variable comportant un piston 2 solidaire dans sa partie inférieure d'une crémaillère 3 qui coopère, d'une part avec un dispositif de guidage à roulement 4, et d'autre part avec un engrenage 5 solidaire d'une bielle 6 permettant de réaliser la transmission du mouvement entre ledit piston et ladite bielle.

Le piston 2 est constitué d'un disque épais 20 recevant sur son pourtour les segments de feu, de compression et racleurs connus en soi. Le disque 20 est solidaire sur l'une de ses faces d'un pied de soutènement 21 constitué d'une structure en ailettes 22 et d'un socle 23.

La structure en ailettes 22 présente un profil évasé dont la partie la plus large est tournée du côté de la face du disque 20. La structure 22 comporte un certain nombre d'ailettes 24 régulièrement réparties sur son pourtour pour permettre le refroidissement du piston 2.

Le socle 23 comporte en son milieu et sur sa hauteur une fente verticale 25 qui est disposée dans le prolongement du pied de soutènement 21. Le socle 23 comprend de chaque côté de la fente 25, d'une part dans un plan vertical une face d'appui 26, et d'autre part dans un plan horizontal et parallèle à celui contenant le disque 20, une face de poussée 27 dont les fonctions seront expliquées ci-après.

Le socle 23 présente perpendiculairement à la fente 25 un alésage débouchant 28 pour la mise en place d'une vis de fixation 29.

La crémaillère 3 est reliée au piston 2 par l'intermédiaire d'une tige de liaison 30 de section en T qui est fixée dans le socle 23 au moyen de la vis 29.

La tige de liaison 30 présente un premier voile 31 qui pénètre à l'intérieur de la fente verticale 25 du socle 23 jusqu'à ce que le trou 32 ménagé dans ledit voile coopère avec l'alésage 28 pour permettre à la vis 29 de traverser ledit socle et coopérer avec un écrou de serrage.

La tige de liaison 30 présente un second voile 33 disposé perpendiculairement au premier et qui vient en appui contre la face 26 du socle 23.

La crémaillère 3 est constituée de deux éléments indépendants 34 et 35 appelés demi-crémaillères qui sont fixés de chaque côté du premier voile 31 de la tige de liaison 30 par l'intermédiaire de vis de serrage 36.

Chaque demi-crémaillère 34, 35 comporte dans sa partie supérieure une face 37 qui vient en contact avec la face de poussée 27 du socle 23 du piston 2.

Chaque demi-crémaillère 34, 35 comprend une première crémaillère 38 de faible dimension, et une seconde crémaillère 39 de forte dimension dirigée dans une direction opposée à la première.

Lorsque les demi-crémaillères 34, 35 sont fixées sur la tige de liaison 30, on constate que les premières crémaillères 38 de faibles dimensions sont disposées de part et d'autre du premier voile 31 de ladite tige, et sur une grande partie de sa hauteur.

Le dispositif de guidage à roulement 4 est constitué de rouleaux synchronisés 40 qui assurent un guidage sans frottement des demi-crémaillères 34, 35 sur le bloc moteur, et d'un dispositif d'engrènement 41 qui permet la synchronisation du déplacement desdits rouleaux par rapport au piston 2.

Chaque rouleau 40 est constitué d'un manchon cylindrique creux 42 ou plein qui coopère avec la surface de roulement du second voile 33 de la tige de liaison 30, et avec une plaque lisse 43 solidaire du bloc moteur.

Le dispositif d'engrènement 41 comprend des roues dentées 44 qui sont fixées sur les rouleaux 40 à chaque extrémité des manchons 42.

Les roues dentées 44 coopèrent avec les crémaillères 38 de faibles dimensions de chaque demi-crémaillère 34, 35, et avec une pièce 45 de section en U dont chacune des extrémités longitudinales comporte une crémaillère 46 qui constitue un des éléments du dispositif d'engrènement 41.

Les roues dentées 44 comportent un alésage central 47 pourvu de cannelures coopérant avec celles usinées à chaque bout d'un axe 48 qui permet de réunir lesdites roues entre elles à chaque extrémité du manchon cylindrique creux 42. La liaison par cannelures des roues dentées 44 sur l'axe 48 interdit toute rotation de ces dernières par rapport audit axe (figure 5A).

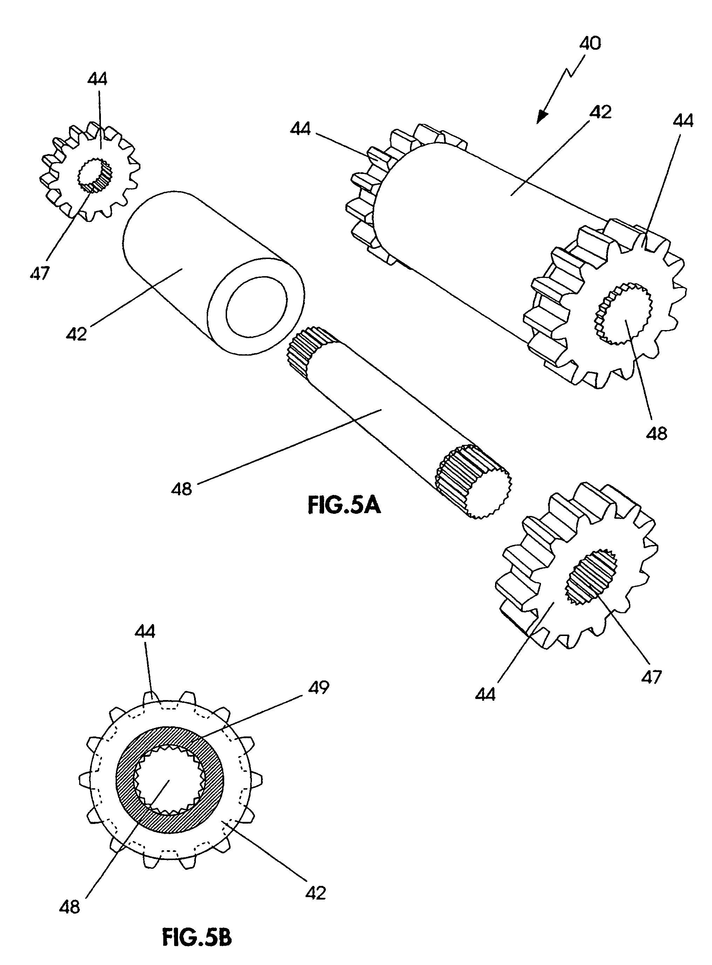

Le diamètre externe de l'axe 48 est de dimensions déterminées pour venir traverser l'alésage interne du manchon cylindrique 42 et délimiter avec ce dernier un espace libre pour permettre la mise en place d'une bague 49 réalisée dans une matière souple, telle que par exemple, du caoutchouc ou toute autre matière analogue (figure 5B).

La bague 49 permet de constituer un liaison élastique et compressible entre le manchon 42 et les roues dentées 44 de sorte qu'une différence de vitesse entre le manchon et les roues dentées ne détruise pas prématurément ces dernières, et les crémaillères 38 et 46 du dispositif d'engrènement 41.

On constate que le profil de la pièce 45 permet de disposer dans sa creusure la plaque lisse 43 pour fixer l'ensemble sur le bloc moteur et constituer un dispositif de roulement et de synchronisation sur lequel évoluent simultanément les rouleaux 40 et les roues dentées 44.

On note que les rouleaux 40 constitués des manchons 42 viennent rouler sur la face du second voile 33 de la tige de liaison 30 de section en T d'une part, et sur la plaque lisse 43 fixée sur le bloc moteur d'autre part.

En outre, le point de contact entre les rouleaux synchronisés 40 et la face du second voile 33 d'une part, et la plaque lisse 43 d'autre part, est situé au niveau du rayon primitif des roues dentées 44.

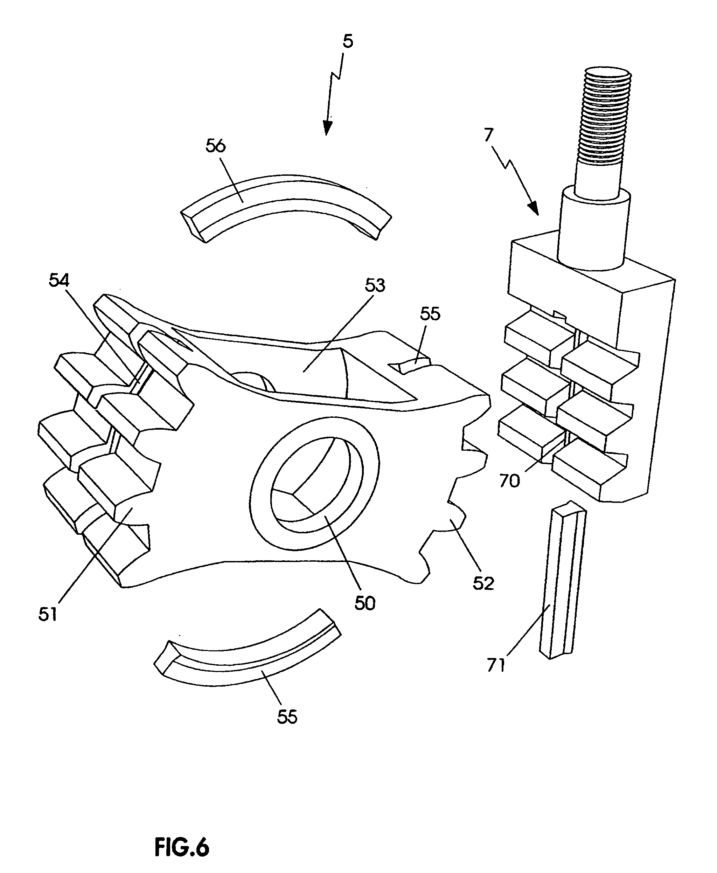

En figure 6 on a représenté l'engrenage 5 du dispositif de transmission mécanique 1 suivant la présente invention.

L'engrenage 5 présente un profil tronqué comportant de chaque côté de son alésage central 50 des dentures 51 et 52 coopérant respectivement avec la seconde crémaillère 39 des demi-crémaillères 34 et 35, et la crémaillère de commande 7 qui est montée dans une cavité, ou sur un guide, aménagés dans le bloc moteur.

La position de la crémaillère de commande 7 par rapport au bloc moteur est assurée par un dispositif de contrôle, non représenté, mais qui est décrit dans une demande de brevet français n° 98 04601 appartenant au demandeur.

L'engrenage 5 comporte entre les dentures 51, 52 un évidemment 53 permettant la mise en place de la bielle 6, et plus particulièrement de son pied 60, pour que son alésage 61 coopère avec celui 50 dudit engrenage. Ce dernier est fixé au pied 60 de la bielle 6 par l'intermédiaire d'un axe de liaison 62 qui traverse les alésages 50 et 61.

A mi-largeur de chaque denture 51, 52, est prévu une rainure courbe 54, 55, dont le rayon de courbure est centré sur le point de basculement de l'engrenage 5 autour de la bielle 6.

A l'intérieur des rainures 54, 55 sont fixés respectivement des segments 56, 57 présentant un profil courbe identique à ceux desdites rainures. Les segments 56, 57 peuvent présenter une section de profil non rectangulaire, leur interdisant tout déplacement à l'intérieur des rainures 54, 55 de l'engrenage 5.

La crémaillère de commande 7 coopérant avec les dentures 52 de l'engrenage 5 comporte à mi-largeur une rainure 70 verticale et rectiligne dans laquelle est fixé un segment 71 de même profil.

Les segments 56, 57 et 71 constituent des surfaces de roulement dont le point de contact est positionné au niveau du rayon primitif de l'engrenage 5. Les surfaces de roulement assurent le centrage de l'engrenage 5 entre les demi-crémaillères 34, 35 d'une part, et la crémaillère de commande 7 d'autre part.

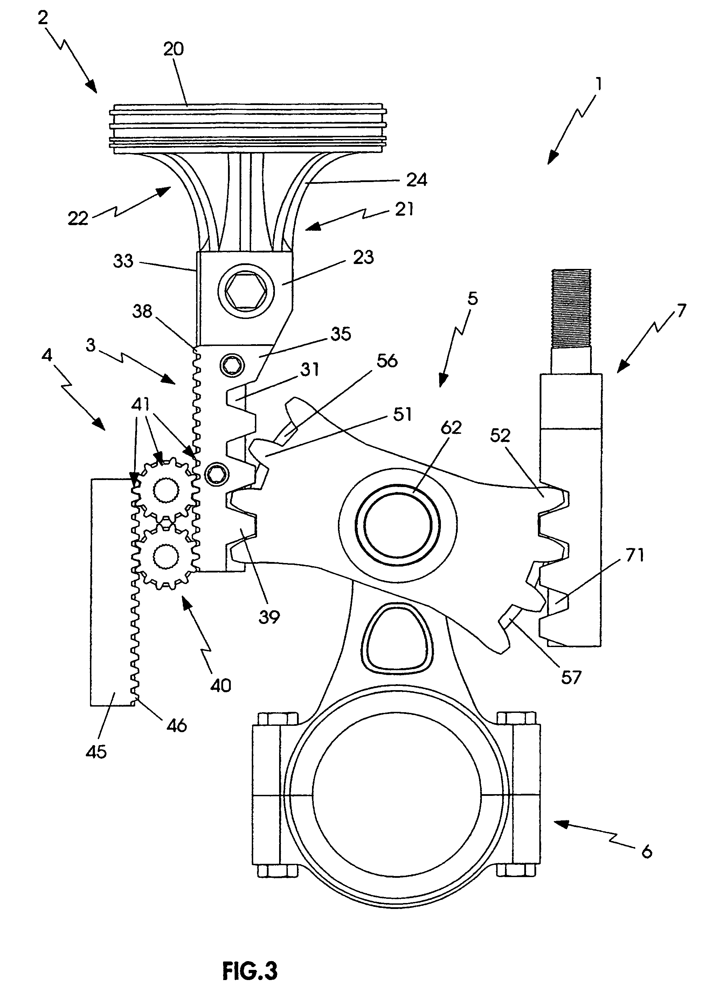

En effet, le segment 56 des dentures 51 de l'engrenage 5 vient rouler, pendant le fonctionnement du moteur à cylindrée variable, sur la tranche du premier voile 31 de la tige de liaison 30 et plus particulièrement sur la tranche se trouvant en dessous du socle 23 du piston 2 (figure 3).

Egalement, le segment 57 des dentures 52 de l'engrenage 5 vient rouler, pendant le fonctionnement du moteur à cylindrée variable, sur le segment rectiligne 71 de la crémaillère de commande 7 (figure 3).

## Revendications

1. Dispositif de transmission mécanique pour moteur à cylindrée variable, comprenant un piston (2) solidaire dans sa partie inférieure d'une crémaillère (3) coopérant :
• d'une part avec un dispositif de guidage
• et d'autre part avec un engrenage (5) solidaire d'une bielle (6) permettant de réaliser la transmission du mouvement entre le piston et ladite bielle, **caractérisé en ce que** ledit dispositif de guidage et un dispositif de guidage à roulement (4), constitué d'au moins un rouleau (40) qui assure un guidage sans frottement de ladite crémaillère (3) sur le bloc moteur et d'un dispositif d'engrènement (41) qui permet la synchronisation du déplacement dudit rouleau par rapport au piston (2).

2. Dispositif de transmission mécanique suivant la revendication 1, **caractérisé en ce que** le piston (2) est constitué d'un disque épais (20) solidaire sur l'une de ses faces d'un pied de soutènement (21).

3. Dispositif de transmission mécanique suivant la revendication 2, **caractérisé en ce que** le pied de soutènement (21) comporte une structure en ailettes (22) présentant un profil évasé dont la partie la plus large est tournée du côté de la face du disque (20), des ailettes (24) régulièrement réparties sur son pourtour pour permettre le refroidissement du piston (2), et un socle (23).

4. Dispositif de transmission mécanique suivant la revendication 3, **caractérisé en ce que** le socle (23) comporte en son milieu et sur sa hauteur une fente verticale (25) qui est disposée dans le prolongement du pied de soutènement (21).

5. Dispositif de transmission mécanique suivant la revendication 4, **caractérisé en ce que** le socle (23) comprend de chaque côté de la fente (25), d'une part dans un plan vertical une face d'appui (26), et d'autre part dans un plan horizontal et parallèle à celui contenant le disque (20) une face de poussée (27).

6. Dispositif de transmission mécanique suivant la revendication 3, **caractérisé en ce que** la crémaillère (3) est reliée au piston (2) par l'intermédiaire d'une tige de liaison (30) de section en T qui est fixée dans le socle (23).

7. Dispositif de transmission mécanique suivant la revendication 6, **caractérisé en ce que** la tige de liaison (30) présente un premier voile (31) qui pénètre à l'intérieur de la fente verticale (25) du socle (23) jusqu'à ce que le trou (32) ménagé dans ledit voile coopère avec l'alésage (28) pour permettre à une vis (29) de traverser ledit socle et coopérer avec un écrou de serrage.

8. Dispositif de transmission mécanique suivant la revendication 6, **caractérisé en ce que** la tige de liaison (30) présente un second voile (33) disposé perpendiculairement au premier et qui vient en appui contre la face (26) du socle (23).

9. Dispositif de transmission mécanique suivant la revendication 6, **caractérisé en ce que** la crémaillère (3) est constituée de deux éléments indépendants (34 et 35) formant des demi-crémaillères qui sont fixées de chaque côté du premier voile (31) de la tige de liaison (30).

10. Dispositif de transmission mécanique suivant la revendication 9, **caractérisé en ce que** chaque demi-crémaillère (34, 35) comporte dans sa partie supérieure une face (37) qui vient en contact avec la face de poussée (27) du socle (23).

11. Dispositif de transmission mécanique suivant la revendication 9, **caractérisé en ce que** chaque demi-crémaillère (34, 35) comprend une première crémaillère (38) de faible dimension qui coopère avec le dispositif de guidage à roulement (4) et une seconde crémaillère (39) de forte dimension dirigée dans une direction opposée à la première pour coopérer avec l'engrenage (5) de transmission du mouvement entre le piston (2) et la bielle (6).

12. Dispositif de transmission mécanique suivant la revendication 1, **caractérisé en ce que** le dispositif de guidage à roulement (4) est constitué d'au moins un rouleau (40) qui assure un guidage sans frottement de demi-crémaillères (34, 35) formant la crémaillère (3) sur le bloc moteur.

13. Dispositif de transmission mécanique suivant la revendication 1, **caractérisé en ce que** le dispositif de guidage à roulement (4) est constitué d'au moins un rouleau (40) qui assure un guidage sans frottement de demi-crémaillères (34, 35) formant la crémaillère (3) sur le bloc moteur, et d'un dispositif d'engrènement (41) qui permet la synchronisation du déplacement dudit rouleau par rapport au piston (2).

14. Dispositif de transmission mécanique suivant la revendication 1, **caractérisé en ce que** le dispositif de guidage à roulement (4) est constitué de rouleaux synchronisés (40) qui assurent un guidage sans frottement de demi-crémaillères (34, 35) formant la crémaillère (3) sur le bloc moteur, et d'un dispositif d'engrènement (41) qui permet la synchronisation du déplacement desdits rouleaux par rapport au piston (2).

15. Dispositif de transmission mécanique suivant la revendication 1, **caractérisé en ce que** le dispositif de guidage à roulement (4) est constitué de rouleaux synchronisés (40) qui assurent un guidage sans frottement de demi-crémaillères (34, 35) formant la crémaillère (3) sur le bloc moteur et d'un dispositif d'engrènement (41) qui permet la synchronisation du déplacement desdits rouleaux par rapport au piston (2), et d'une liaison élastique (49) prévue entre lesdits rouleaux et ledit dispositif d'engrènement qui autorise des variations de vitesse.

16. Dispositif de transmission mécanique suivant la revendication 1, **caractérisé en ce que** chaque rouleau (40) est constitué d'un manchon cylindrique creux (42) qui coopère avec la surface de roulement du second voile (33) de la tige de liaison (30), et avec une plaque lisse (43) solidaire du bloc moteur.

17. Dispositif de transmission mécanique suivant la revendication 16, **caractérisé en ce que** le dispositif d'engrènement (41) comprend des roues dentées (44) qui sont fixées à chaque extrémité des manchons (42).

18. Dispositif de transmission mécanique suivant la revendication 17, **caractérisé en ce que** les roues dentées (44) coopèrent avec les crémaillères (38) de faibles dimensions de chaque demi-crémaillère (34, 35), et avec une pièce (45) dont les extrémités longitudinales comportent une crémaillère (46).

19. Dispositif de transmission mécanique suivant la revendication 17, **caractérisé en ce que** les roues dentées (44) comportent un alésage central (47) pourvu de cannelures coopérant avec celles usinées à chaque bout d'un axe (48) qui permet de réunir lesdites roues entre elles à chaque extrémité du manchon cylindrique creux (42).

20. Dispositif de transmission mécanique suivant la revendication 19, **caractérisé en ce que** le diamètre externe de l'axe (48) est de dimensions déterminées pour venir traverser l'alésage interne du manchon cylindrique creux (42), et délimiter avec ce dernier un espace libre pour permettre la mise en place d'une liaison élastique (49).

21. Dispositif de transmission mécanique suivant la revendication 18, **caractérisé en ce que** la liaison élastique est constituée d'une bague (49) prévue entre le manchon (42) et les roues dentées (44) de sorte qu'une différence de vitesse entre le manchon et les roues dentées ne détruise pas prématurément ces dernières, et les crémaillères (38 et 46) du dispositif d'engrènement (41).

22. Dispositif de transmission mécanique suivant la revendication 16, **caractérisé en ce que** les rouleaux (40) constitués des manchons (42) viennent rouler sur la face du second voile (33) de la tige de liaison (30) de section en T d'une part, et sur la plaque lisse (43) fixée sur le bloc moteur d'autre part.

23. Dispositif de transmission mécanique la revendication 1, **caractérisé en ce que** l'engrenage (5) présente un profil tronqué comportant de chaque côté de son alésage central (50) des dentures (51 et 52) coopérant respectivement avec la seconde crémaillère (39) des demi-crémaillères (34 et 35), et la crémaillère de commande (7) qui est montée dans une cavité, ou sur un guide, aménagés dans le bloc moteur.

24. Dispositif de transmission mécanique suivant la revendication 23, **caractérisé en ce que** l'engrenage (5) comporte entre les dentures (51, 52) un évidemment (53) permettant la mise en place de la bielle (6), et plus particulièrement de son pied (60), pour que son alésage (61) coopère avec celui (50) dudit engrenage.

25. Dispositif de transmission mécanique suivant la revendication 23, **caractérisé en ce que** l'engrenage (5) présente à mi-largeur de chaque denture (51, 52) une rainure courbe (54, 55), dont le rayon de courbure est centré sur le point de basculement dudit engrenage autour de la bielle (6).

26. Dispositif de transmission mécanique suivant la revendication 25, **caractérisé en ce que** des segments à profil courbe (56, 57) sont fixés à l'intérieur des rainures (54, 55) pour constituer les surfaces de roulement de l'engrenage (5).

27. Dispositif de transmission mécanique suivant la revendication 23, **caractérisé en ce que** la crémaillère de commande (7) coopérant avec les dentures (52) de l'engrenage (5) comporte à mi-largeur une rainure (70) verticale et rectiligne dans laquelle est fixé un segment (71) de même profil.

28. Dispositif de transmission mécanique suivant la revendication 26, **caractérisé en ce que** le segment (56) des dentures (51) de l'engrenage (5) vient rouler sur la tranche du premier voile (31) de la tige de liaison (30), tandis que le segment (57) des dentures (52) de l'engrenage (5) vient rouler sur le segment rectiligne (71) de la crémaillère de commande (7).

29. Dispositif de transmission mécanique suivant la revendication 22, **caractérisé en ce que** le point de contact entre les rouleaux synchronisés (40) et la face du second voile (33) d'une part, et la plaque lisse (43) d'autre part, est situé au niveau du rayon primitif des roues dentées (44).

30. Dispositif de transmission mécanique suivant l'une quelconque des revendications 26 et 27, **caractérisé en ce que** les segments (56, 57, 71) constituent des surfaces de roulement dont le point de contact est positionné au niveau du rayon primitif de l'engrenage (5).

## Patentansprüche

1. Mechanische Kraftübertragungsvorrichtung für einen Motor mit variablem Hubraum, die einen Kolben (2) aufweist, der in seinem unteren Teil fest mit einer Zahnstange (3) verbunden ist, welche
- einerseits mit einer Führungsvorrichtung
- und andererseits mit einem Getriebe (5), das fest mit einer Stange (6) verbunden ist, wodurch die Übertragung der Bewegung zwischen dem Kolben und der Stange erfolgen kann, zusammenwirkt,
**dadurch gekennzeichnet, dass** die Führungsvorrichtung eine Wälzlagerführungsvorrichtung (4) ist, die aus mindestens einer Rolle (40), die eine reibungsfreie Führung der Zahnstange (3) am Motorblock gewährleistet, und einer Eingriffsvorrichtung (41), die die Synchronisation der Verschiebung der Rolle bezüglich des Kolbens (2) gestattet, besteht.

2. Mechanische Kraftübertragungsvorrichtung nach Anspruch 1, **dadurch gekennzeichnet, dass** der Kolben (2) aus einer dicken Scheibe (20) besteht, die an einer ihrer Flächen fest mit einem Stützbein (21) verbunden ist.

3. Mechanische Kraftübertragungsvorrichtung nach Anspruch 2, **dadurch gekennzeichnet, dass** das Stützbein (21) eine Rippenkonstruktion (22) mit einem aufgeweiteten Profil, dessen breitester Teil der Fläche der Scheibe (20) zugewandt ist, Rippen (24), die gleichmäßig über ihren Umfang verteilt sind, um die Abkühlung des Kolbens (2) zu gestatten, und einen Sockel (23) aufweist.

4. Mechanische Kraftübertragungsvorrichtung nach Anspruch 3, **dadurch gekennzeichnet, dass** der Sockel (23) in seiner Mitte und an seiner Höhe einen vertikalen Schlitz (25) aufweist, der in der Verlängerung des Stützbeins (21) angeordnet ist.

5. Mechanische Kraftübertragungsvorrichtung nach Anspruch 4, **dadurch gekennzeichnet, dass** der Sockel (23) auf jeder Seite des Schlitzes (25) einerseits in einer vertikalen Ebene eine Stützfläche (26) und andererseits in einer horizontalen Ebene, die parallel zu der die Scheibe (20) enthaltenden verläuft, eine Schubfläche (27) aufweist.

6. Mechanische Kraftübertragungsvorrichtung nach Anspruch 3, **dadurch gekennzeichnet, dass** die Zahnstange (3) über eine Verbindungsstange (30) mit T-förmigem Querschnitt, die im Sockel (23) befestigt ist, mit dem Kolben (2) verbunden ist.

7. Mechanische Kraftübertragungsvorrichtung nach Anspruch 6, **dadurch gekennzeichnet, dass** die Verbindungsstange (30) einen ersten Steg (31) aufweist, der in das Innere des vertikalen Schlitzes (25) des Sockels (23) eintritt, bis das in dem Steg ausgebildete Loch (32) mit der Bohrung (28) zusammenwirkt, damit eine Schraube (29) den Sockel durchqueren und mit einer Spannmutter zusammenwirken kann.

8. Mechanische Kraftübertragungsvorrichtung nach Anspruch 6, **dadurch gekennzeichnet, dass** die Verbindungsstange (30) einen zweiten Steg (33) aufweist, der senkrecht zum ersten verläuft und an der Fläche (26) des Sockels (23) zur Anlage kommt.

9. Mechanische Kraftübertragungsvorrichtung nach Anspruch 6, **dadurch gekennzeichnet, dass** die Zahnstange (3) aus zwei unabhängigen Elementen (34 und 35) besteht, die Zahnstangenhälften bilden, welche auf jeder Seite des ersten Steges (31) der Verbindungsstange (30) befestigt sind.

10. Mechanische Kraftübertragungsvorrichtung nach Anspruch 9, **dadurch gekennzeichnet, dass** jede Zahnstangenhälfte (34, 35) in ihrem oberen Teil eine Fläche (37) aufweist, die mit der Schubfläche (27) des Sockels (23) in Kontakt kommt.

11. Mechanische Kraftübertragungsvorrichtung nach Anspruch 9, **dadurch gekennzeichnet, dass** jede Zahnstangenhälfte (34, 35) eine erste Zahnstange (38) geringer Abmessung, die mit der Wälzlagerführungsvorrichtung (4) zusammenwirkt, und eine zweite Zahnstange (39) großer Abmessung, die in einer der ersten Richtung entgegengesetzten Richtung ausgerichtet ist, um mit dem Getriebe (5) zur Übertragung der Bewegung zwischen dem Kolben (2) und der Stange (6) zusammenzuwirken, umfasst.

12. Mechanische Kraftübertragungsvorrichtung nach Anspruch 1, **dadurch gekennzeichnet, dass** die Wälzlagerführungsvorrichtung (4) aus mindestens einer Rolle (40) besteht, die eine reibungslose Führung der die Zahnstange (3) bildenden Zahnstangenhälften (34, 35) am Motorblock gewährleistet.

13. Mechanische Kraftübertragungsvorrichtung nach Anspruch 1, **dadurch gekennzeichnet, dass** die Wälzlagerführungsvorrichtung (4) aus mindestens einer Rolle (40), die eine reibungslose Führung der die Zahnstange (3) bildenden Zahnstangenhälften (34, 35) am Motorblock gewährleistet, und einer Eingriffsvorrichtung (41), die die Synchronisation der Verschiebung der Rolle bezüglich des Kolbens (2) gestattet, besteht.

14. Mechanische Kraftübertragungsvorrichtung nach Anspruch 1, **dadurch gekennzeichnet, dass** die Wälzlagerführungsvorrichtung (4) aus synchronisierten Rollen (40), die eine reibungslose Führung von die Zahnstange (3) bildenden Zahnstangenhälften (34, 35) am Motorblock gewährleisten, und einer Eingriffsvorrichtung (41), die die Synchronisation der Verschiebung der Rollen bezüglich des Kolbens (2) gestattet, besteht.

15. Mechanische Kraftübertragungsvorrichtung nach Anspruch 1, **dadurch gekennzeichnet, dass** die Wälzlagerführungsvorrichtung (4) aus synchronisierten Rollen (40), die eine reibungslose Führung von die Zahnstange (3) bildenden Zahnstangenhälften (34, 35) am Motorblock gewährleisten, und einer Eingriffsvorrichtung (41), die die Synchronisation der Verschiebung der Rollen bezüglich des Kolbens (2) gestattet, sowie einer zwischen den Rollen und der Eingriffsvorrichtung vorgesehenen elastischen Verbindung (49), die Geschwindigkeitsänderungen gestattet, besteht.

16. Mechanische Kraftübertragungsvorrichtung nach Anspruch 1, **dadurch gekennzeichnet, dass** jede Rolle (40) aus einer hohlen zylindrischen Buchse (42) besteht, die mit der Wälzfläche des zweiten Stegs (33) der Verbindungsstange (30) und mit einer fest mit dem Motorblock verbundenen glatten Platte (43) zusammenwirkt.

17. Mechanische Kraftübertragungsvorrichtung nach Anspruch 16, **dadurch gekennzeichnet, dass** die Eingriffsvorrichtung (41) Zahnräder (44) umfasst, die an jedem Ende der Buchsen (42) befestigt sind.

18. Mechanische Kräftübertragungsvorrichtung nach Anspruch 17, **dadurch gekennzeichnet, dass** die Zahnräder (44) mit den Zahnstangen (38) geringer Abmessungen jeder Zahnstangenhälfte (34, 35) und mit einem Teil (45), dessen Längsenden eine Zahnstange (46) enthalten, zusammenwirken.

19. Mechanische Kraftübertragungsvorrichtung nach Anspruch 17, **dadurch gekennzeichnet, dass** die Zahnräder (44) eine mittlere Bohrung (47) aufweisen, die mit Furchen versehen sind, welche mit jenen an jedem Ende einer Achse (48) herausgearbeiteten zusammenwirken, wodurch die Zahnräder an jedem Ende der hohlen zylindrischen Buchse (42) zusammengefügt werden können.

20. Mechanische Kraftübertragungsvorrichtung nach Anspruch 19, **dadurch gekennzeichnet, dass** der Außendurchmesser der Achse (48) bestimmte Abmessungen aufweist, damit er die Innenbohrung der hohlen zylindrischen Buchse (42) durchqueren kann und somit mit Letzterer einen Freiraum definiert, damit eine elastische Verbindung (49) angeordnet werden kann.

21. Mechanische Kraftübertragungsvorrichtung nach Anspruch 18, **dadurch gekennzeichnet, dass** die elastische Verbindung aus einem Ring (49) besteht, der zwischen der Buchse (42) und den Zahnrädern (44) vorgesehen ist, so dass ein Geschwindigkeitsunterschied zwischen der Buchse und den Zahnrädern diese Letzteren und die Zahnstangen (38 und 46) der Eingriffsvorrichtung (41) nicht vorzeitig zerstört.

22. Mechanische Kraftübertragungsvorrichtung nach Anspruch 16, **dadurch gekennzeichnet, dass** die aus Buchsen (42) bestehenden Rollen (40) einerseits über die Fläche des zweiten Stegs (33) der Verbindungsstange (30) mit T-förmigem Querschnitt und andererseits über die am Motorblock befestigte glatte Platte (43) rollen.

23. Mechanische Kraftübertragungsvorrichtung nach Anspruch 1, **dadurch gekennzeichnet, dass** das Getriebe (5) ein abgestumpftes Profil aufweist, das auf jeder Seite seiner mittleren Bohrung (50) Verzahnungen (51 und 52) aufweist, die mit der zweiten Zahnstange (39) der Zahnstangenhälften (34 und 35) bzw. der Steuerzahnstange (7) zusammenwirken, die in einem Hohlraum oder auf einer Führung angebracht ist, der bzw. die in dem Motorblock ausgebildet ist.

24. Mechanische Kraftübertragungsvorrichtung nach Anspruch 23, **dadurch gekennzeichnet, dass** das Getriebe (5) zwischen den Verzahnungen (51, 52) eine Aussparung (53) aufweist, die die Anordnung der Stange (6) und insbesondere ihres Fußes (60) gestattet, damit seine Bohrung (61) mit der (50) des Getriebes zusammenwirkt.

25. Mechanische Kraftübertragungsvorrichtung nach Anspruch 23, **dadurch gekennzeichnet, dass** das Getriebe (5) auf halber Breite jeder Verzahnung (51, 52) eine gekrümmte Nut (54, 55) aufweist, deren Krümmungsradius auf dem Kipppunkt des Getriebes um die Stange (6) zentriert ist.

26. Mechanische Kraftübertragungsvorrichtung nach Anspruch 25, **dadurch gekennzeichnet, dass** Segmente mit gekrümmtem Profil (56, 57) im Inneren der Nuten (54, 55) befestigt sind und so die Wälzflächen des Getriebes (5) bilden.

27. Mechanische Kraftübertragungsvorrichtung nach Anspruch 23, **dadurch gekennzeichnet, dass** die mit den Verzahnungen (52) des Getriebes (5) zusammenwirkende Steuerzahnstange (7) auf halber Breite eine vertikale und geradlinige Nut (70) aufweist, in der ein Segment (71) gleichen Profils befestigt ist.

28. Mechanische Kraftübertragungsvorrichtung nach Anspruch 26, **dadurch gekennzeichnet, dass** das Segment (56) der Verzahnungen (51) des Getriebes (5) über die Endfläche des ersten Stegs (31) der Verbindungsstange (30) rollt, während das Segment (57) der Verzahnungen (52) des Getriebes (5) über das geradlinige Segment (71) der Steuerzahnstange (7) rollt.

29. Mechanische Kraftübertragungsvorrichtung nach Anspruch 22, **dadurch gekennzeichnet, dass** sich der Kontaktpunkt zwischen den synchronisierten Rollen (40) und der Fläche des zweiten Stegs (33) einerseits und der glatten Platte (43) andererseits auf dem Teilkreisradius der Zahnräder (44) befindet.

30. Mechanische Kraftübertragungsvorrichtung nach Anspruch 26 oder 27, **dadurch gekennzeichnet, dass** die Segmente (56, 57, 71) Wälzflächen bilden, deren Kontaktpunkt auf dem Teilkreisradius des Getriebes (5) positioniert ist.

## Claims

1. Mechanical transmission device for a variable-displacement engine, comprising a piston (2) secured at its lower part to a rack (3) collaborating:
• on the one hand with a guide device,
• and on the other hand, with a gear (5) secured to a connecting rod (6) to allow movement to be transmitted between the piston and said connecting rod, **characterized in that** said guide device is a roll-bearing guide device (4) consisting of at least one roller (40) which provides frictionless guidance of said rack (3) on the engine block and of a gearing device (41) which allows the displacement of said roller with respect to the piston (2) to be synchronized.

2. Mechanical transmission device according to Claim 1, **characterized in that** the piston (2) consists of a thick disc (20) secured on one of its faces to a support leg (21).

3. Mechanical transmission device according to Claim 2, **characterized in that** the support leg (21) has a finned structure (22) having a flared profile, the widest part of which faces towards the face of the disc (20), fins (24) uniformly distributed about its periphery to allow the piston (2) to be cooled, and a mounting block (23).

4. Mechanical transmission device according to Claim 3, **characterized in that** the mounting block (23) at its middle and over its height has a vertical slot (25) which lies in the continuation of the support leg (21).

5. Mechanical transmission device according to Claim 4, **characterized in that** the mounting block (23) on each side of the slot (25) has, on the one hand, in a vertical plane a bearing face (26) and, on the other hand, in a horizontal plane parallel to the one containing the disc (20), a thrust face (27).

6. Mechanical transmission device according to Claim 3, **characterized in that** the rack (3) is connected to the piston (2) by a link rod (30) of T-shaped cross section, which is fixed into the mounting block (23).

7. Mechanical transmission device according to Claim 6, **characterized in that** the link rod (30) has a first web (31) which penetrates the vertical slot (25) of the mounting block (23) to such a point that the hole (32) formed in said web collaborates with the bore (28) to allow a screw (29) to pass through said mounting block and collaborate with a tightening nut.

8. Mechanical transmission device according to Claim 6, **characterized in that** the link rod (30) has a second web (33) perpendicular to the first and which bears against the face (26) of the mounting block (23).

9. Mechanical transmission device according to Claim 6, **characterized in that** the rack (3) consists of two independent elements (34 and 35) forming half-racks which are fixed one on each side of the first web (31) of the link rod (30).

10. Mechanical transmission device according to Claim 9, **characterized in that** each half-rack (34, 35) in its upper part has a face (37) which comes into contact with the thrust face (27) of the mounting block (23).

11. Mechanical transmission device according to Claim 9, **characterized in that** each half-rack (34, 35) comprises a first rack (38) of a small size which collaborates with the rolling-bearing guide device (4), and a second rack (39) of large size facing in the opposite direction to the first, to collaborate with the gear (5) that transmits movement between the piston (2) and the connecting rod (6).

12. Mechanical transmission device according to Claim 1, **characterized in that** the rolling-bearing guide device (4) consists of at least one roller (40) which provides frictionless guidance of half-racks (34, 35) forming the rack (3) on the engine block.

13. Mechanical transmission device according to Claim 1, **characterized in that** the rolling-bearing guide device (4) consists of at least one roller (40) which provides frictionless guidance of half-racks (34, 35) forming the rack (3) on the engine block, and of a gearing device (41) which allows the displacement of said roller with respect to the piston (2) to be synchronized.

14. Mechanical transmission device according to Claim 1, **characterized in that** the rolling-bearing guide device (4) consists of synchronized rollers (40) which provide frictionless guidance of half-racks (34, 35) forming the rack (3) on the engine block, and of a gearing device (41) which allows the displacement of said rollers with respect to the piston (2) to be synchronized.

15. Mechanical transmission device according to Claim 1, **characterized in that** the rolling-bearing guide device (4) consists of synchronized rollers (40) which provide frictionless guidance of half-racks (34, 35) forming the rack (3) on the engine block, and of a gearing device (41) which allows the displacement of said rollers with respect to the piston (2) to be synchronized, and of an elastic coupling (49) provided between said rollers and said gearing device, which allows variations in speed.

16. Mechanical transmission device according to Claim 1, **characterized in that** each roller (40) consists of a hollow cylindrical sleeve (42) which collaborates with the runway surface of the second web (33) of the link rod (30) and with a smooth plate (43) secured to the engine block.

17. Mechanical transmission device according to Claim 16, **characterized in that** the gearing device (41) comprises gear wheels (44) which are fixed to each end of the sleeves (42).

18. Mechanical transmission device according to Claim 17, **characterized in that** the gear wheels (44) collaborate with the small-sized racks (38) of each half rack (34, 35) and with a piece (45) the longitudinal ends of which have a rack (46).

19. Mechanical transmission device according to Claim 17, **characterized in that** the gear wheels (44) have a central bore (47) which has splines collaborating with those machined at each end of a shaft (48) which allows said wheels to be joined together at each end of the hollow cylindrical sleeve (42).

20. Mechanical transmission device according to Claim 19, **characterized in that** the outside diameter of the shaft (48) is of dimensions which are designed so that it can pass through the interior bore of the hollow cylindrical sleeve (42) and therewith delimit a gap so that an elastic coupling (49) can be fitted.

21. Mechanical transmission device according to Claim 18, **characterized in that** the elastic coupling consists of a ring (49) provided between the sleeve (42) and the gear wheels (44) so that a difference in speed between the sleeve and the gear wheels does not cause premature destruction of the latter and of the racks (38 and 46) of the gearing device (41).

22. Mechanical transmission device according to Claim 16, **characterized in that** the rollers (40) consisting of the sleeves (42) roll along the face of the second web (33) of the T-section link rod (30), on the one hand, and along the smooth plate (43) fixed to the engine block, on the other hand.

23. Mechanical transmission device according to Claim 1, **characterized in that** the gear (5) has a truncated profile comprising, on each side of its central bore (50), sets of teeth (51 and 52) collaborating respectively with the second rack (39) of the half racks (34 and 35) and the control rack (7) which is mounted in a cavity, or on a guide, each formed in the engine block.

24. Mechanical transmission device according to Claim 23, **characterized in that** the gear (5) between the sets of teeth (51, 52) has a recess (53) for accommodating the connecting rod (6), more specifically its small end (60), so that its bore (61) collaborates with that (50) of said gear.

25. Mechanical transmission device according to Claim 23, **characterized in that** the gear (5), midway across the width of each set of teeth (51, 52), has a curved groove (54, 55), the radius of curvature of which is centred on the point about which said gear rocks about the connecting rod (6).

26. Mechanical transmission device according to Claim 25, **characterized in that** curved-profile segments (56, 57) are fixed inside the grooves (54, 55) to constitute the runway surfaces of the gear (5).

27. Mechanical transmission device according to Claim 23, **characterized in that** the control rack (7) collaborating with the sets of teeth (52) of the gear (5) midway across the width has a vertical and straight groove (70) in which a segment (71) of the same profile is fixed.

28. Mechanical transmission device according to Claim 26, **characterized in that** the segment (56) of the sets of teeth (51) of the gear (5) runs along the edge face of the first web (31) of the link rod (30), while the segment (57) of the sets of teeth (52) of the gear (5) runs along the straight segment (71) of the control rack (7).

29. Mechanical transmission device according to Claim 22, **characterized in that** the point of contact between the synchronized rollers (40) and the face of the second web (33) on the one hand, and the smooth plate (43) on the other hand, lies on the pitch radius of the gear wheels (44).

30. Mechanical transmission device according to either one of Claims 26 and 27, **characterized in that** the segments (56, 57, 71) constitute runway surfaces, the point of contact of which is positioned on the pitch radius of the gear (5).
